# EUROPÄISCHE PATENTSCHRIFT

(11) **EP 3 838 603 B1**
(45) Veröffentlichungstag und Bekanntmachung des Hinweises auf die Patenterteilung: **30.03.2022**
(21) Anmeldenummer: 19217609.7
(22) Anmeldetag: 18.12.2019
(51) Int. Cl.: B41J 3/407, B41J 11/00, B41J 15/16, G01G 19/414, G01G 23/42

(54) **ETIKETTENDRUCKER**
LABEL PRINTER
IMPRIMANTE D'ÉTIQUETTES

(43) Veröffentlichungstag der Anmeldung: 23.06.2021
(73) Patentinhaber: Bizerba SE & Co. KG, 72336 Balingen (DE)
(72) Erfinder: Reiss, Rafael, 72336 Balingen (DE); Offermann, Holger, 72469 Meßstetten (DE)
(74) Vertreter: Manitz Finsterwald Patent- und Rechtsanwaltspartnerschaft mbB

(56) Entgegenhaltungen:
- DE-A1-102008 019 931

## Beschreibung

Die Erfindung betrifft einen Etikettendrucker zum Bedrucken von auf einem Trägerband aufgebrachten, insbesondere auf Rolle gewickelten Etiketten, umfassend einen Druckkopf und ein Gegenelement zu dem Druckkopf, das dazu ausgebildet ist, das Trägerband mit den Etiketten in Anlage an dem Druckkopf zu halten, insbesondere eine angetriebene Druckwalze, wobei das Trägerband zwischen dem Druckkopf und dem Gegenelement hindurchführbar ist, einen Antriebsmechanismus für das Trägerband mit einer angetriebenen, insbesondere ortsfest gelagerten, Trägerband-Zugwalze, die um eine Drehachse drehbar ist, und wenigstens eine der Trägerband-Zugwalze zugeordnete, nicht angetriebene Trägerband-Andruckrolle, die zwei axiale Enden aufweist, um eine Rotationsachse drehbar ist und parallel zu der Drehachse der Trägerband-Zugwalze verläuft, wobei das Trägerband zwischen der Trägerband-Zugwalze und der jeweiligen Trägerband-Andruckrolle hindurchführbar und insbesondere entlang einer vorgegebenen Trägerband-Transportbahn transportierbar ist.

Etikettendrucker werden zur Kennzeichnung von Waren im produzierenden Gewerbe und in der Logistik sowie in der lebensmittelverarbeitenden Industrie, insbesondere als Teil eines Systems zur Gewichts- und Preisauszeichnung, eingesetzt. Üblicherweise sind die Etiketten dabei auf einem Trägerband aufgebracht und liegen in Form einer Etikettenrolle vor. Im Betrieb des Etikettendruckers werden die Etiketten dann mittels der Trägerband-Zugwalze an dem Druckkopf vorbeigeführt und bedruckt. Danach werden die Etiketten von dem Trägerband abgelöst und auf die Waren appliziert, und das rücklaufende Trägerband kann aufgewickelt werden. Die jeweilige Trägerband-Andruckrolle wird nicht angetrieben, drückt das Trägerband jedoch gegen die Trägerband-Zugwalze. Die Trägerband-Zugwalze alleine wäre nicht ausreichend geeignet, das Trägerband zu ziehen. Durch die wenigstens eine Trägerband-Andruckrolle kann jedoch eine Anpresskraft und damit eine ausreichende Vortriebskraft auf das Trägerband erzeugt werden.

Dabei muss der Abstand zwischen der Trägerband-Zugwalze und der jeweiligen Trägerband-Andruckrolle an die Dicke des jeweils eingesetzten Trägerbands angepasst werden. Einerseits muss der Abstand zwar groß genug sein, um das Trägerband hindurchführen zu können, andererseits darf der Abstand nicht zu groß sein, um eine ausreichend große Anpress- bzw. Vortriebskraft auf das Trägerband erzeugen zu können. Die Anpassung des genannten Abstands an die jeweilige Trägerbanddicke ist bei bekannten Etikettendruckern jedoch oftmals etwas umständlich und mit einem gewissen Zeitaufwand verbunden. DE-A1-10 2008 019931 beschreibt einen Etikettendrucker.

Der Erfindung liegt die Aufgabe zugrunde, einen Etikettendrucker der eingangs genannten Art anzugeben, der eine einfache und schnelle Anpassung des Abstands zwischen der Trägerband-Zugwalze und der jeweiligen Trägerband-Andruckrolle an das jeweilige Trägerbanddicke ermöglicht.

Diese Aufgabe wird durch einen Etikettendrucker mit den Merkmalen des Anspruchs 1 gelöst, und insbesondere dadurch, dass die jeweilige Trägerband-Andruckrolle senkrecht zu ihrer Rotationsachse und in einer Verschieberichtung auf die Trägerband-Zugwalze zu, insbesondere linear, verschiebbar gelagert ist, wobei zur Ausübung einer Anpresskraft auf das Trägerband eine Federeinrichtung vorgesehen ist, die die jeweilige Trägerband-Andruckrolle in die Verschieberichtung vorspannt.

Dadurch, dass die jeweilige Trägerband-Andruckrolle in Richtung der Trägerband-Zugwalze verschiebbar und vorgespannt ist, können sich bei eingelegtem Trägerband der passende Abstand zwischen der Trägerband-Zugwalze und der jeweiligen Trägerband-Andruckrolle und die passende Anpresskraft auf das Trägerband automatisch einstellen, ohne dass eine separate Einstellung durch einen Bediener erforderlich ist. Darüber hinaus ist eine Federeinrichtung einfach realisierbar. Dabei ist es nicht zwingend erforderlich, dass die Richtung der Vorspannung parallel zu der Verschieberichtung verläuft, sondern diese beiden Richtungen können auch unter einem solchen spitzen Winkel zueinander orientiert sein, dass bei der durch die Federeinrichtung ausgeübten Federkraft eine ausreichende Vortriebskraft auf das Trägerband erzeugt wird. Da bei zwei Trägerband-Andruckrollen die Rotationsachsen jeweils parallel zu der Drehachse der Trägerband-Zugwalze verlaufen, verlaufen die beiden Rotationsachsen der beiden Trägerband-Andruckrollen auch parallel zueinander. Grundsätzlich kann die jeweilige Trägerband-Andruckrolle auch entlang einer gekrümmten Bahn verschiebbar gelagert sein.

Dabei ist es bevorzugt, wenn zwei Trägerband-Andruckrollen vorgesehen sind, wobei die Trägerband-Zugwalze zwischen den beiden Trägerband-Andruckrollen angeordnet ist und/oder die Federeinrichtung die beiden Trägerband-Andruckrollen aufeinander zu vorspannt. Das Trägerband kann dann von zwei einander gegenüberliegenden Seiten an die Trägerband-Zugwalze angepresst werden. Durch den Einsatz von zwei Trägerband-Andruckrollen kann die vorgenannte Vortriebskraft erhöht werden. Hierdurch ist es auch einfacher möglich, die Trägerband-Transportbahn derart zu wählen, dass das rücklaufende Trägerband mit seiner silikonisierten und damit an sich weniger Haftung aufweisenden Vorderseite, d.h. mit der Seite, auf der zuvor, d.h. vor ihrer Ablösung, die Etiketten aufgebracht waren, an der Trägerwand-Zugwalze anliegt. Die Federeinrichtung kann für die Vorspannung der beiden Trägerband-Andruckrollen gemeinsame oder separate Federelemente aufweisen.

Nach einer Ausgestaltung der Erfindung ist die jeweilige Trägerband-Andruckrolle an ihren beiden axialen Enden verschiebbar gelagert. Hierdurch kann auf einfache Weise eine stabile und zuverlässige verschiebbare Lagerung der jeweiligen Trägerband-Andruckrolle erreicht werden. Insbesondere kann hierdurch einem Verkanten der jeweiligen Trägerband-Andruckrolle beim Verschieben entgegengewirkt werden. Darüber hinaus ist eine derartige Lagerung sehr flexibel. Insbesondere können hierdurch zumindest bestimmte Fertigungstoleranzen gut ausgeglichen werden.

Insbesondere kann eine Halterung vorgesehen ist, um die jeweilige Trägerband-Andruckrolle verschiebbar zu lagern, wobei bevorzugt die Halterung zwei, insbesondere gabelförmig angeordnete, Haltearme aufweist, an und zwischen denen die jeweilige Trägerband-Andruckrolle verschiebbar gelagert ist. Die beiden Haltearme definieren also einen Zwischenbereich, in dem die jeweilige Trägerband-Andruckrolle angeordnet ist. Beim Verschwenken der Führungseinheit wird die Halterung und damit die jeweilige Trägerband-Andruckrolle verschwenkt.

Vorzugsweise sind die beiden Haltearme jeweils mit wenigstens einer, insbesondere linear verlaufenden, Führungsbahn versehen, in denen die beiden axialen Enden der jeweiligen Trägerband-Andruckrolle verschiebbar geführt sind. Unter dem Begriff Führungsbahn ist jede Einrichtung zu verstehen, die das jeweilige axiale Ende entlang einer vorgegebenen Bewegungslinie führt. Durch die verschiebbare Lagerung der jeweiligen Trägerband-Andruckrolle an ihren beiden axialen Enden können die bereits vorstehend erläuterten Vorteile erreicht werden.

Die jeweilige Führungsbahn kann dabei als ein länglicher, insbesondere rechteckförmiger oder langlochförmiger, den jeweiligen Haltearm durchsetzender Schlitz ausgebildet sein. Zusätzlich oder alternativ kann die jeweilige Trägerband-Andruckrolle an ihren beiden axialen Enden jeweils einen Gleitstein aufweisen, der in der jeweiligen Führungsbahn verschiebbar geführt ist. Hierbei handelt es sich um einerseits einfache und andererseits aber gleichzeitig langlebige und wartungsarme Maßnahmen, mit denen die verschiebbare Lagerung der jeweiligen Trägerband-Andruckrolle zuverlässig und betriebssicher realisiert werden kann.

Es kann vorgesehen sein, dass die Halterung, insbesondere eine Führungseinheit für das Trägerband, die die Halterung umfasst, um eine Schwenkachse zwischen einer Betriebsstellung und einer Einsetzstellung für das Trägerband verschwenkbar ist, wobei in der Einsetzstellung für das Trägerband die jeweilige Trägerband-Andruckrolle von der Trägerband-Zugwalze weggeschwenkt ist. In der Betriebsstellung ist ein Wechsel der Etikettenrolle zeitaufwändig, da bei dieser Stellung die Trägerband-Zugwalze und die jeweiligen Trägerband-Andruckrolle zumindest nicht ausreichend weit voneinander beabstandet sind, so dass das Trägerband der neuen Etikettenrolle umständlich zwischen die Trägerband-Zugwalze und die jeweilige Trägerband-Andruckrolle eingefädelt werden muss. Um dies zu vermeiden, wird bei einem Wechsel der Etikettenrolle die Halterung bzw. das Führungselement einschließlich der wenigstens einen, der Trägerband-Zugwalze zugeordneten Trägerband-Andruckrolle in die Einsetzstellung für das Trägerband verschwenkt, wodurch die jeweilige Trägerband-Andruckrolle von der Trägerband-Zugwalze weggeschwenkt wird. Der jeweilige Abstand zwischen der Trägerband-Zugwalze und der jeweiligen Trägerband-Andruckrolle wird dadurch vergrößert bzw. erst geschaffen, so dass das Trägerband nicht umständlich eingefädelt werden muss, sondern ohne weiteren Aufwand ganz einfach bzw. ungehindert eingelegt werden kann. Im Übrigen müsste ohne eine Wegschwenkbarkeit der jeweiligen Trägerband-Andruckrolle für ein Einfädeln des Trägerbands der neuen Etikettenrolle in Richtung der Drehachse der Trägerband-Zugwalze die Halterung im Bereich der Trägerband-Zugwalze offen sein und sie wäre damit komplexer und weniger stabil.

Nach einer weiteren Ausgestaltung der Erfindung umfasst die Federeinrichtung wenigstens eine Zugfeder, wobei die jeweilige Zugfeder an einem der beiden axialen Enden der jeweiligen Trägerband-Andruckrolle angreift. Bei einer Zugfeder handelt es sich um ein kostengünstiges und zuverlässiges Bauteil, das darüber hinaus auf einfache Weise an einem der beiden axialen Enden der jeweiligen Trägerband-Andruckrolle befestigt werden kann. Gegenüber einer Druckfeder bietet eine Zugfeder eine höhere Richtungsstabilität.

Dabei ist es bevorzugt, wenn zwei Zugfedern vorgesehen sind, wobei die eine Zugfeder an dem einen der beiden axialen Enden der jeweiligen Trägerband-Andruckrolle und die andere Zugfeder an dem anderen der beiden axialen Enden der jeweiligen Trägerband-Andruckrolle angreift, oder wenn zwei Trägerband-Andruckrollen vorgesehen sind, wobei die jeweilige Zugfeder an einem der beiden axialen Enden der einen Trägerband-Andruckrolle und an einem der beiden axialen Enden der anderen Trägerband-Andruckrolle angreift. Die beiden vorgenannten Maßnahmen können auch kombiniert werden, so dass dann zwei Trägerband-Andruckrollen mit insgesamt vier axialen Enden und zwei Zugfedern für die vier axialen Enden vorliegen.

Bevorzugt ist vorgesehen, dass die jeweilige Zugfeder außerhalb des zwischen den beiden vorgenannten Haltearmen ausgebildeten Zwischenbereichs und/oder an den jeweiligen vorgenannten Haltearm anliegend angeordnet ist. Der Bereich außerhalb der beiden Haltearme ist gut zugänglich, so dass die jeweilige Zugfeder erforderlichenfalls schnell ausgetauscht werden kann. Darüber hinaus muss bei der Ausgestaltung und Anordnung der jeweiligen Zugfeder nicht bzw. kaum auf die Trägerband-Andruckrolle bzw. Trägerband-Andruckrollen Rücksicht genommen werden, die ja innerhalb der beiden Haltearme angeordnet ist bzw. sind.

Die jeweilige Zugfeder kann als ein, insbesondere langgestrecktes, sich in einer Ebene erstreckendes und/oder ungewundenes, Drahtbiegeteil ausgebildet sein, wobei bevorzugt das Drahtbiegeteil spiegelsymmetrisch ausgebildet ist und/oder die beiden Drahtenden der jeweiligen Zugfeder hakenförmig ausgebildet sind.

Eine derartige Zugfeder ist kostengünstig herstellbar, einfach mit den Trägerband-Andruckrollen verbindbar und einfach verformbar und damit gut an die jeweils vorliegende Konstruktion anpassbar.

Grundsätzlich kann vorgesehen sein, dass, insbesondere in einer Betriebsstellung einer Halterung oder einer Führungseinheit, die vorgegebene Trägerband-Transportbahn im Bereich der Trägerband-Zugwalze und der jeweiligen Trägerband-Andruckrolle einen S-förmigen Verlauf, d.h. einen Verlauf, der von einer Linkskrümmung in eine Rechtskrümmung wechselt oder umgekehrt, aufweist. Die Kontaktfläche des Trägerbands mit der angetriebenen Trägerband-Zugwalze kann damit vergrößert werden, so dass die Vortriebskraft auf das Trägerband weiter erhöht werden kann. Sind zwei Trägerband-Andruckrollen vorgesehen, ist es bevorzugt, wenn die vorgegebene Trägerband-Transportbahn im Bereich der Trägerband-Zugwalze und der beiden Trägerband-Andruckrollen einen Doppel-S-förmigen Verlauf aufweist. Die im Zusammenhang mit einer Trägerband-Andruckrolle und einer S-förmig verlaufenden Trägerband-Transportbahn erläuterten Vorteile können dann in einem noch höheren Maße eintreten, da sich in diesem Fall das Trägerband gewissermaßen teilweise um die Trägerband-Zugwalze herumschlingen kann.

Nach einer weiteren Ausgestaltung der Erfindung sind zwei Trägerband-Andruckrollen vorgesehen, die über einen Zwischenraum voneinander beabstandet angeordnet sind, wobei die Trägerband-Zugwalze in der Betriebsstellung der Halterung oder der Führungseinheit in den Zwischenraum eingreift, insbesondere um den genannten Doppel-S-förmigen Verlauf der vorgegebenen Trägerband-Transportbahn zu erzeugen, und/oder in der Einsetzstellung der Halterung oder der Führungseinheit relativ zu dem Zwischenraum, insbesondere vollständig, aus dem Zwischenraum zurückgezogen ist, wobei insbesondere vorgesehen ist, dass die Trägerband-Zugwalze ortsfest gelagert ist und beim Verschwenken der Führungseinheit von der Betriebsstellung in die Einsetzstellung der Zwischenraum bewegt wird.

Insbesondere ist vorgesehen, dass beim Verschwenken der Halterung oder der Führungseinheit aus der Einsetzstellung in die Betriebsstellung zumindest in einer ersten Phase der Verschwenkbewegung die beiden Trägerband-Andruckrollen durch die Trägerband-Zugwalze, unter Vergrößerung ihres gegenseitigen Abstands und gegen die Vorspannung der Federeinrichtung auseinander gedrückt werden. Hierdurch kann die Anpresskraft auf das Trägerband und damit die Vortriebskraft auf das Trägerband auf einfache Weise und insbesondere für beide Trägerband-Andruckrollen symmetrisch erzeugt werden.

Es kann weiter vorgesehen sein, die Trägerband-Zugwalze relativ zu dem Zwischenraum über die zu den beiden Rotationsachsen der beiden Trägerband-Andruckrollen senkrechte Verbindungsgerade hinaus in den Zwischenraum hineingeschwenkt wird, so dass in einer an die erste Phase anschließenden zweiten Phase der Verschwenkbewegung die beiden Trägerband-Andruckrollen durch die vorgespannte Federeinrichtung und unter Verringerung ihres gegenseitigen Abstands wieder aufeinander zu verschoben werden. Dadurch können die beiden Trägerband-Andruckrollen mit der Trägerband-Zugwalze gewissermaßen verrastet werden, und die Halterung oder die Führungseinheit kann in der Betriebsstellung gehalten werden. Zum Verschwenken der Halterung oder der Führungseinheit aus der Betriebsstellung in die Einsetzstellung müssen die beiden Trägerband-Andruckrollen dann ebenfalls zunächst auseinander gedrückt werden.

Darüber hinaus kann die Führungseinheit für das Trägerband das Gegenelement zu dem Druckkopf umfassen, wobei in der Einsetzstellung der Führungseinheit das Gegenelement von dem Druckkopf weggeschwenkt ist. Hierdurch ergeben sich dieselben Vorteile wie bei dem vorstehend beschriebenen Wegschwenken der jeweiligen Trägerband-Andruckrolle von der Trägerband-Zugwalze.

Insbesondere können in der Transportrichtung des Trägerbands gesehen die Trägerband-Zugwalze und die jeweilige Trägerband-Andruckrolle nach dem Drucckopf und dem Gegenelement und insbesondere nach einer nach dem Druckkopf und dem Gegenelement angeordneten Spendekante des Etikettendruckers angeordnet sein. Bei der Trägerband-Zugwalze handelt es sich dann um einen Antrieb, der am rücklaufenden Trägerband angreift. Ferner kann eine in der Transportrichtung des Trägerbands gesehen nach der Trägerband-Zugwalze und der wenigstens einen Trägerband-Andruckrolle angeordnete, angetriebene Trägerband-Aufwickelwalze vorgesehen sein.

Vorteilhafte Ausgestaltungen der Erfindung sind auch in den Unteransprüchen, der Beschreibung und der Zeichnung beschrieben.

Die Erfindung wird im Folgenden beispielhaft unter Bezugnahme auf die Zeichnungen beschrieben. Es zeigen,
- Fig. 1: einen erfindungsgemäßen Etikettendrucker zum Bedrucken von auf einem Trägerband aufgebrachten Etiketten gemäß einer ersten Aus-führungsform mit einer Druckkopfeinheit, einer Führungseinheit für das Trägerband und einem Hochgeschwindigkeitsantrieb, die sich jeweils in einer Betriebsstellung befinden,
- Fig. 2: einen erfindungsgemäßen Etikettendrucker gemäß einer zweiten Aus-führungsform mit einer alternativen Führungseinheit, die sich in einer Einsetzstellung für das Trägerband befindet,
- Fig. 3: den Etikettendrucker aus Fig. 2, wobei sich zusätzlich die Druckkopf-einheit in einer Einsetzstellung für ein Thermotransferband befindet,
- Fig. 4: den Etikettendrucker aus Fig. 1, wobei sich der Hochgeschwindig-keitsantrieb in einer Einsetzstellung für das Trägerband befindet,
- Fig. 5: den Etikettendrucker aus Fig. 1, wobei sowohl die Druckkopfeinheit als auch die Führungseinheit abgenommen sind,
- Fig. 6: eine rückwärtige Ansicht des Etikettendruckers aus Fig. 1 auf den Antrieb des Etikettendruckers,
- Fig. 7: die Führungseinheit aus Fig. 1 in Einzeldarstellung mit zwei Andruck-rollen, einer zugehörigen Halterung und einer Federeinrichtung,
- Fig. 8: die alternative Führungseinheit aus Fig. 2 in Einzeldarstellung mit zwei Andruckrollen, einer zugehörigen Halterung und einer Federeinrichtung,
- Fig. 9: die zwei Andruckrollen und die Federeinrichtung aus Fig. 7 oder 8,
- Fig. 10: einen Haltearm der Halterung aus Fig. 7 oder 8,
- Fig. 11: die Druckkopfeinheit aus Fig. 1 oder 2 in Einzeldarstellung, und
- Fig. 12: eine alternative Druckkopfeinheit.

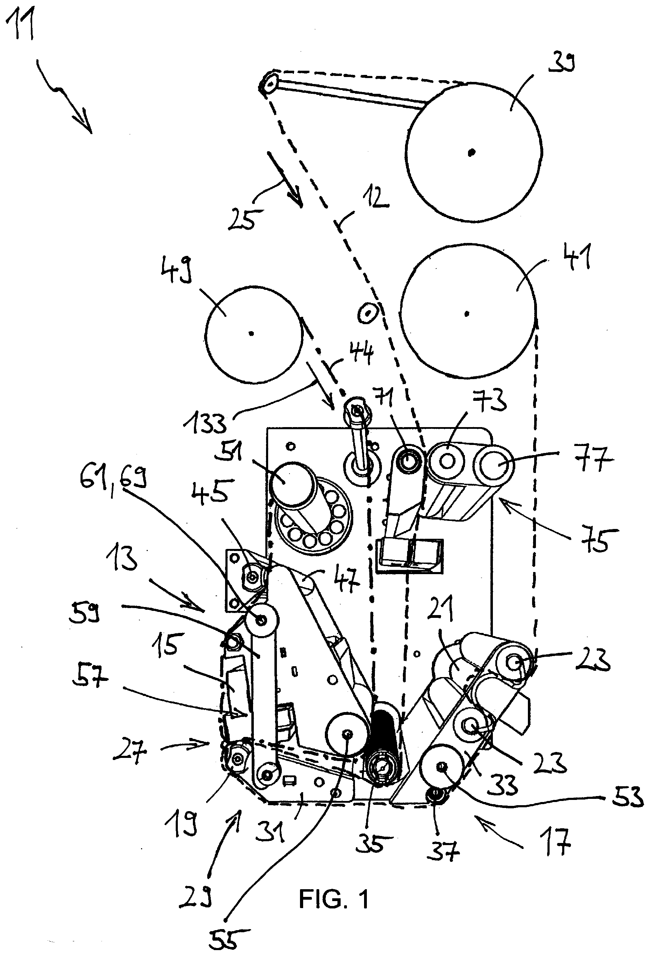

Der in Fig. 1 dargestellte Etikettendrucker 11 zum Bedrucken von auf einem Trägerband 12 aufgebrachten, auf eine Rolle gewickelten Etiketten umfasst eine Druckkopfeinheit 13 mit einem Druckkopf 15 sowie eine Führungseinheit 17 für das Trägerband 12, das ein Gegenelement 19 zu dem Druckkopf 15 aufweist. Das Trägerband 12 mit den Etiketten wird im Betrieb des Etikettendruckers 11 zwischen dem Druckkopf 15 und dem Gegenelement 19 hindurchgeführt. Das Gegenelement 19 ist dazu vorgesehen, das Trägerband 12 mit den Etiketten in der Anlage an dem Druckkopf 15 zu halten, um das Bedrucken der Etiketten zu gewährleisten.

Darüber hinaus umfasst der Etikettendrucker 11 einen Antriebsmechanismus für das Trägerband 12 mit einer angetriebenen, ortsfest gelagerten Trägerband-Zugwalze 21, der zwei nicht angetriebene Trägerband-Andruckrollen 23 zugeordnet sind, die jeweils ein Teil der Führungseinheit 17 sind. Die Trägerband-Zugwalze 21 und die beiden Trägerband-Andruckrollen 23 sind dazu vorgesehen, das Trägerband 12 entlang einer vorgegebenen Trägerband-Transportbahn zu transportieren. Hierzu wird das Trägerband 12 zwischen der Trägerband-Zugwalze 21 und der jeweiligen Trägerband-Andruckrolle 23 hindurchgeführt. Die beiden Trägerband-Andruckrollen 23 drücken dabei das Trägerband 12 jeweils gegen die Trägerband-Zugwalze 21, so dass eine ausreichende Anpress- und Vortriebskraft auf das Trägerband 12 erzeugt wird. Das Trägerband 12 wird von einer Etikettenrolle 39 abgewickelt und von einer angetriebenen, ortsfest gelagerten Trägerband-Aufwickelwalze 41 aufgewickelt.

Konkret ist zwischen den beiden Trägerband-Andruckrollen 23 ein Zwischenraum ausgebildet, in den die Trägerband-Zugwalze 21 eingreift, so dass die Trägerband-Transportbahn zwischen der Trägerband-Zugwalze 21 und der jeweiligen Trägerband-Andruckrolle 23 jeweils S-förmig verläuft, so dass in diesem Bereich insgesamt ein Doppel-S-förmiger Verlauf der Trägerband-Transportbahn resultiert. Die Trägerband-Zugwalze 21 und den beiden Trägerband-Andruckrollen 23 sind dabei in der Transportrichtung 25 des Trägerbands 12 gesehen hinter dem Drucckopf 15 und dem Gegenelement 19 und hinter einer dem Druckkopf 15 und dem Gegenelement 19 unmittelbar nachgeordneten Spendekante 27 angeordnet.

Die Führungseinheit 17 umfasst ein Winkelelement 29, das einen horizontal orientierten ersten Winkelarm 31 und einen schräg nach oben orientierten zweiten Winkelarm 33 aufweist. Dabei ist das Gegenelement 19 an dem ersten Winkelarm 31 angeordnet, und die beiden Trägerband-Andruckrollen 23 sind an dem zweiten Winkelarm 33 angeordnet. Der von den beiden Winkelarmen 31, 33 eingeschlossene Winkel besitzt einen Wert von ca. 130°. Zur Anpassung der Trägerband-Transportbahn an die winkelige Ausbildung des Winkelelements 29 umfasst die Führungseinheit 17 ferner eine Umlenkrolle 35, die innenliegend, am Scheitelpunkt des Winkelelements 29 angeordnet ist, und eine weitere Umlenkrolle 37, die außenliegend, am Scheitelpunkt des Winkelelements 29 angeordnet ist.

Der in Fig. 1 dargestellte Etikettendrucker 11 ist als ein Thermotransfer-Etikettendrucker ausgebildet, d.h. bei dem Druckkopf 15 handelt es sich um einen Thermotransfer-Druckkopf. Der Etikettendrucker 11 besitzt somit auch einen Antriebsmechanismus für ein auf eine Rolle gewickeltes Thermotransferband 44. Der Antriebsmechanismus für das Thermotransferband 44 umfasst eine angetriebene, ortsfest gelagerte Thermotransferband-Zugwalze 45, der eine nicht angetriebene Thermotransferband-Andruckrolle 47 zugeordnet ist, die ein Teil der Druckkopfeinheit 13 ist. Die Thermotransferband-Andruckrolle 47 drückt das Thermotransferband 44 gegen die Thermotransferband-Zugwalze 45, so dass eine ausreichende Anpress- und Vortriebskraft auf das Thermotransferband 44 erzeugt wird. Im Betrieb des Etikettendruckers 11 wird das Thermotransferband 44 entlang einer vorgegebenen Thermotransferband-Transportbahn transportiert und ist dabei zwischen dem Druckkopf 15 und dem Gegenelement 19 einerseits und zwischen der Thermotransferband-Zugwalze 45 und der Thermotransferband-Andruckrolle 47 andererseits hindurchgeführt. Das Thermotransferband 44 wird von einer Thermotransferbandrolle 49 abgewickelt und von einer angetriebenen, ortsfest gelagerten Thermotransferband-Aufwickelwalze 51 aufgewickelt. Die Thermotransferband-Zugwalze 45 und die Thermotransferband-Andruckrolle 47 sind in Transportrichtung 133 des Thermotransferbands 44 gesehen nach dem Druckkopf 15 und dem Gegenelement 19 angeordnet.

Wie aus Fig. 1 erkennbar ist, ist in der in Fig. 1 gezeigten Betriebsstellung der Führungseinheit 17 ein Wechsel der Etikettenrolle 39 zeitaufwändig, da das Trägerband 12 der neuen Etikettenrolle umständlich zwischen den Druckkopf 15 und das Gegenelement 19 einerseits und zwischen die Trägerband-Zugwalze 21 und die jeweilige Trägerband-Andruckrolle 23 andererseits eingefädelt werden muss, da der Abstand zwischen dem Druckkopf 15 und dem Gegenelement 19 einerseits und zwischen der Trägerband-Zugwalze 21 und jeder der beiden Trägerband-Andruckrollen 23 andererseits zumindest nicht ausreichend groß ist.

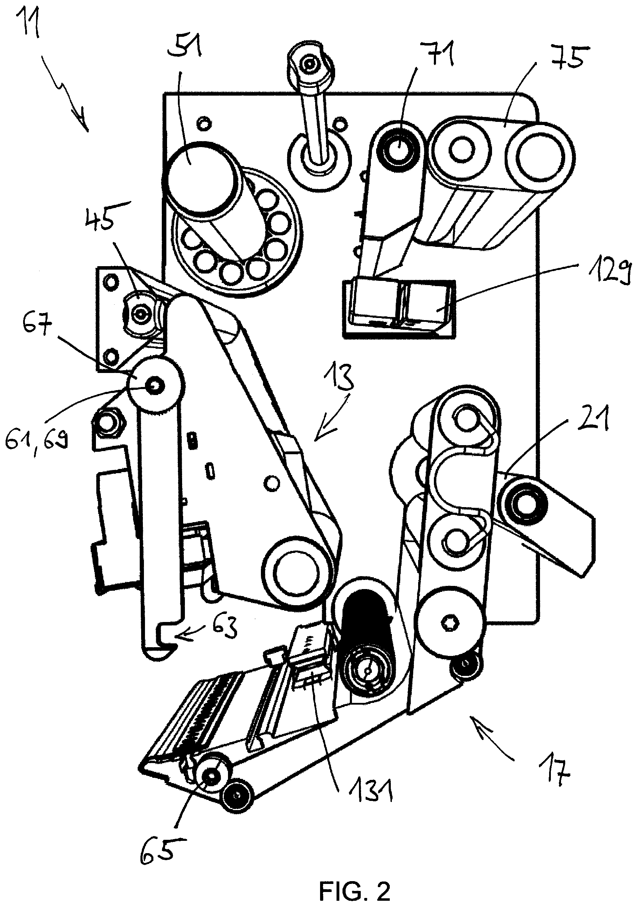

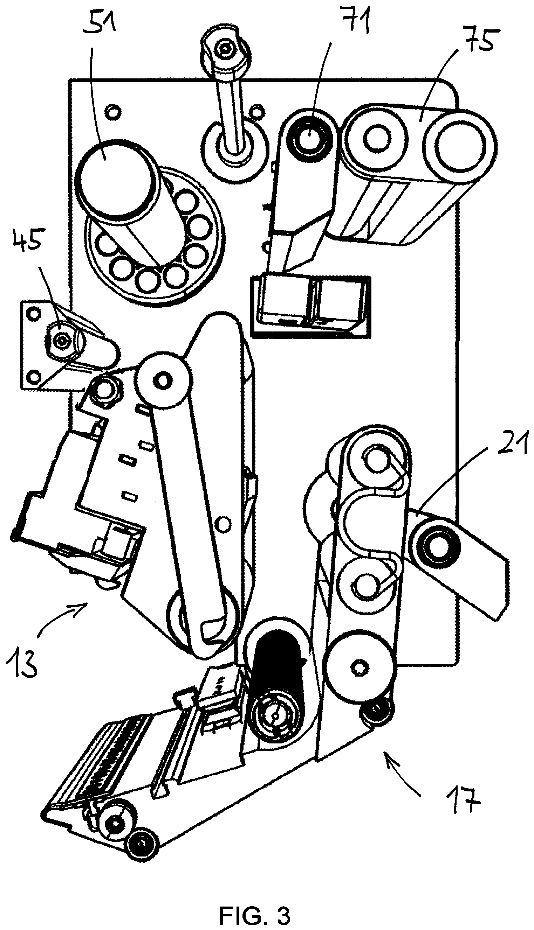

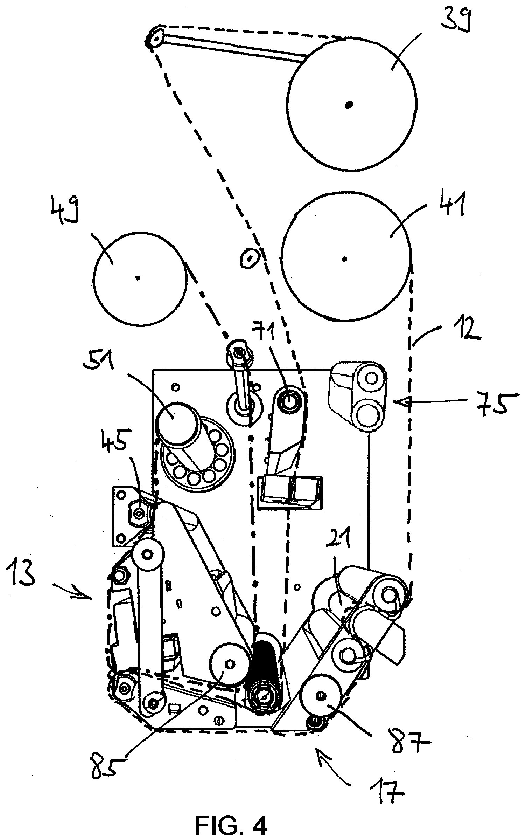

Deshalb kann die Führungseinheit 17 aus ihrer in den Fig. 1 und 4 gezeigten Betriebsstellung gegen den Uhrzeigersinn in ihre in den Fig. 2 und 3 gezeigte Einsetzstellung für das Trägerband 12 verschwenkt werden. Hierzu ist die Führungseinheit 17, insbesondere das Winkelelement 29, um eine Schwenkachse 53 verschwenkbar gelagert. In der Einsetzstellung der Führungseinheit 17 ist das Gegenelement 19 von dem Druckkopf 15 weggeschwenkt und die beiden Trägerband-Andruckrollen 23 sind von der Trägerband-Zugwalze 21 weggeschwenkt, so dass sich der Abstand zwischen dem Gegenelement 19 und dem Druckkopf 15 und zwischen den beiden Trägerband-Andruckrollen 23 und der Trägerband-Zugwalze 21 vergrößert. Insbesondere ist die Trägerband-Zugwalze 21 in der Einsetzstellung der Führungseinheit 17 - relativ gesehen - vollständig aus dem zwischen den beiden Trägerband-Andruckrollen 23 ausgebildeten Zwischenraum zurückgezogen. Das Trägerband 12 der neuen Trägerbandrolle kann dann einfach eingelegt werden.

Gleiches gilt für einen Wechsel der Thermotransferbandrolle 49. Auch dieser Wechsel ist in der in Fig. 1, 2 und 4 gezeigten Betriebsstellung der Druckkopfeinheit 13 zeitaufwändig, da das Thermotransferband 44 der neuen Thermotransferbandrolle umständlich zwischen die Thermotransferband-Zugwalze 45 und die Thermotransferband-Andruckrolle 47 hindurchgefädelt werden muss, da der Abstand zwischen der Thermotransferband-Zugwalze 45 und der Thermotransferband-Andruckrolle 47 zumindest nicht ausreichend groß ist.

Deshalb kann auch die Druckkopfeinheit 13 aus ihrer in den Fig. 1, 2 und 4 gezeigten Betriebsstellung im Uhrzeigersinn in ihre in Fig. 3 gezeigte Einsetzstellung für das Thermotransferband 44 verschwenkt werden. Hierzu ist die Druckkopfeinheit 13 um eine Druckkopfeinheit-Schwenkachse 55 verschwenkbar gelagert. In der Einsetzstellung der Druckkopfeinheit 13 ist die Thermotransferband-Andruckrolle 47 von der Thermotransferband-Zugwalze 45 weggeschwenkt, so dass sich der Abstand zwischen der Thermotransferband-Andruckrolle 47 und der Thermotransferband-Zugwalze 45 vergrößert. Das Thermotransferband 44 der neuen Thermotransferbandrolle kann dann einfach eingelegt werden.

Das Einsetzen des Thermotransferbands 44 im Bereich des Druckkopfs 15 und des Gegenelements 19 bereitet dabei keine Schwierigkeiten, weil der Druckkopf 15 und das Gegenelement 19 durch das Verschwenken der Führungseinheit 17 bereits einen ausreichend großen Abstand voneinander einnehmen. Grundsätzlich kann dies aber auch anders vorgesehen sein. Um das Thermotransferband 44 im Bereich des Druckkopfs 15 und des Gegenelements 19 dann einfach einsetzen zu können, sollte das Verschwenken der Druckkopfeinheit 13 dann bevorzugt derart erfolgen, dass der Druckkopf 15 von dem Gegenelement 19 weggeschwenkt wird, wie es bei den in den Figuren gezeigten Ausführungsformen auch der Fall ist.

Darüber hinaus ist eine Halteeinrichtung 57 vorgesehen, die die Führungseinheit 17 entweder in der Betriebsstellung hält, d.h. gegen ein Verschwenken in die Einsetzstellung sichert, oder für ein Verschwenken in die Einsetzstellung freigibt. Die Halteeinrichtung 57 umfasst einen an der Druckkopfeinheit 13 gelagerten Hebel 59, der um eine Achse 61 zwischen einer Haltestellung und einer Freigabestellung drehbar ist. In der Haltestellung wird die Führungseinheit 17 in der Betriebsstellung gesichert, in der Freigabestellung, die der Hebel 59 durch ein Verschwenken im Uhrzeigersinn erreicht, wird die Führungseinheit 17 für ein Verschwenken in die Einsetzstellung freigegeben.

Der Hebel 59 weist an seinem freien Ende eine Ausnehmung 63 auf und die Führungseinheit 17 weist einen abstehenden pilzkopfförmigen Stift 65 auf (vgl. Fig. 2). Befindet sich die Führungseinheit 17 in ihrer Betriebsstellung und der Hebel 59 in seiner Haltestellung, hakt der Hebel 59 mit der Ausnehmung 63 an dem Stift 65 der Führungseinheit 17 ein. Dadurch kann die Führungseinheit 17 in ihrer Betriebsstellung gehalten werden. Ein Verschwenken in ihre Einsetzstellung ist dann nicht möglich. Um den Hebel 59 in seiner Haltestellung festzusetzen, ist eine Rändelschraube 67 vorgesehen (vgl. Fig. 2), die von Hand betätigbar ist. Die Achse der Rändelschraube 67 fällt dabei mit der Achse 61 des Hebels 59 zusammen.

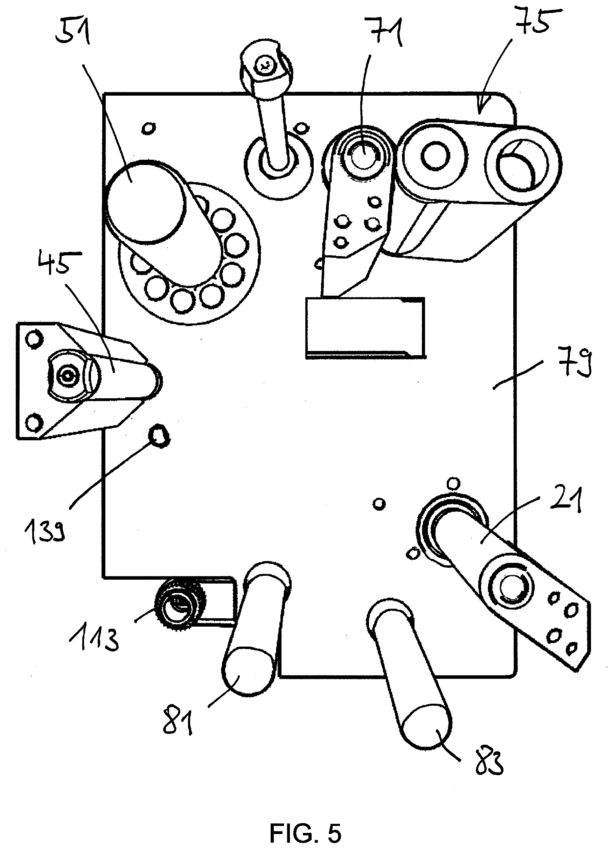

Darüber hinaus ist eine Festsetzeinrichtung in Form eines von Hand betätigbaren, die Achse 61 des Hebels 59 bildenden Blockierstifts 69 vorgesehen (vgl. Fig. 2), durch den die Druckkopfeinheit 13 in ihrer Betriebsstellung festsetzbar ist. Somit ist auch die Druckkopfeinheit 13 durch eine technische Maßnahme in ihrer Betriebsstellung sicherbar. Der Blockierstift 69 ist entlang seiner Längsachse zwischen einer Sperrstellung und einer Entsperrstellung verstellbar. In der Sperrstellung greift der Blockierstift 69 in eine in einem hochkant aufgestellten Träger 79 des Etikettendruckers 11 ausgebildete Sperröffnung 139 ein (vgl. Fig. 5), so dass ein Verschwenken der Druckkopfeinheit 13 unterbunden ist. Wird der Blockierstift 69 hingegen entlang seiner Längsachse entgegen der Vorspannung einer nicht dargestellten Feder nach vorne in seine Entsperrstellung verstellt, insbesondere gezogen, wird die Druckkopfeinheit 13 freigegeben. Die Druckkopfeinheit 13 kann dann in ihre Einsetzstellung verschwenkt werden.

Ferner umfasst der Antriebsmechanismus für das Trägerband 12 eine weitere angetriebene, ortsfest gelagerte Trägerband-Zugwalze 71 und eine der weiteren Trägerband-Zugwalze 71 zugeordnete, nicht angetriebene weitere Trägerband-Andruckrolle 73, die in Transportrichtung des Trägerbands 12 gesehen vor dem Druckkopf 15 und dem Gegenelement 19 angeordnet sind. Die weitere Trägerband-Andruckrolle 73 drückt dabei das Trägerband 12 gegen die weitere Trägerband-Zugwalze 71, so dass eine Anpress- und Vortriebskraft auf das Trägerband 44 erzeugt wird.

Dadurch, dass die weitere Trägerband-Zugwalze 71 und die weitere Trägerband-Andruckrolle 73 dem Druckkopf 15 und dem Gegenelement 19 vorgeschaltet sind, kann das Trägerband 12 mit einer höheren Geschwindigkeit entlang der Trägerband-Transportbahn transportiert werden, als dies ohne die weitere Trägerband-Zugwalze 71 und ohne die weitere Trägerband-Andruckrolle 73 der Fall wäre. Die weitere Trägerband-Zugwalze 71 und die weitere Trägerband-Andruckrolle 73 liegen nämlich näher an der Etikettenrolle 39 als die Trägerband-Zugwalze 21 und die Trägerband-Andruckrollen 23 und können das Trägerband 12 daher leichter von der Etikettenrolle 39 abziehen. Insbesondere muss beim Abziehen keine Kraft für die scharfe Umlenkung des Trägerbands 12 an der Spendekante 27 aufgewandt werden. Der Etiketten-Durchsatz kann dadurch erhöht werden.

Um das Trägerband 12 bei einem Wechsel der Etikettenrolle 39 nicht umständlich zwischen der weiteren Trägerband-Zugwalze 71 und der weiteren Trägerband-Andruckrolle 73 einfädeln zu müssen, ist die weitere Trägerband-Andruckrolle 73 ein Teil eines Schwenkelements 75, das um eine weitere Schwenkachse 77 zwischen einer Betriebsstellung (vgl. die Fig. 1 bis 3) und einer Einsetzstellung für das Trägerband 12 (vgl. Fig. 4) verschwenkbar gelagert ist. Analog zu der vorstehend im Hinblick auf die verschwenkbare Führungseinheit 17 sowie die Trägerband-Zugwalze 21 und die Trägerband-Andruckrollen 23 beschriebenen Situation ist in der Betriebsstellung des Schwenkelements 75 das Trägerband 12 zwischen der weiteren Trägerband-Zugwalze 71 und der weiteren Trägerband-Andruckrolle 73 hindurchführbar und entlang der Trägerband-Transportbahn transportierbar und ist in der Einsetzstellung für das Trägerband 12 die weitere Trägerband-Andruckrolle 73 von der weiteren Trägerband-Zugwalze 71 weggeschwenkt.

Das Schwenkelement 75 wird zum "Öffnen" der Trägerband-Transportbahn aus der in den Fig. 1 bis 3 gezeigten Betriebsstellung nach oben und zum "Schließen" der Trägerband-Transportbahn aus der in Fig. 4 gezeigten Einsetzstellung nach unten verschwenkt. Das Trägerband 12 wird durch die im Uhrzeigersinn drehende weitere Trägerband-Zugwalze 71 nach unten transportiert, wie es in Fig. 1 anhand der Transportrichtung 25 des Trägerbands 12 dargestellt ist. Der Drehsinn der Verschwenkbewegung des Schwenkelements 75 aus der Einsetzstellung in die Betriebsstellung ist daher dem Drehsinn der weiteren Trägerband-Zugwalze 71 entgegengesetzt. Dies bedeutet letztlich, dass im Betrieb des Etikettendruckers 11 das Trägerband 12 das Schwenkelement 75 in Richtung der Betriebsstellung zieht und somit einem Verschwenken in Richtung der Einsetzstellung entgegenwirkt.

Das Schwenkelement 75 mit der weiteren Trägerband-Andruckrolle 73 kann von dem Etikettendrucker 11 abnehmbar sein, und die weitere Trägerband-Zugwalze 71 kann von ihrem Motor mechanisch entkoppelt und als bloße Umlenkrolle verwendbar sein. Der Etikettendrucker 11 kann dann in eine Variante ohne den weiteren Antrieb umgerüstet werden. Alternativ kann die Variante ohne den weiteren Antrieb auch bereits von Werk aus angeboten werden. In beiden Fällen ist es bevorzugt, wenn der Etikettendrucker 11 einen ersten Betriebsmodus und einen zweiten Betriebsmodus aufweist. Der erste Betriebsmodus wird gewählt, wenn der weitere Antrieb, d.h. die weitere Trägerband-Zugwalze 71 und die weitere Trägerband-Andruckrolle 73, vorhanden ist bzw. sind. Es handelt sich hierbei dann um einen Hochgeschwindigkeitsmodus. Der zweite Betriebsmodus wird gewählt, wenn der weitere Antrieb fehlt, d.h. wenn die weitere Trägerband-Andruckrolle 73 abgenommen ist oder von vorne herein fehlt und die weitere Trägerband-Zugwalze 71 von einem zugehörigen Motor mechanisch abgekoppelt ist oder dieser von vorne herein fehlt. Es handelt sich hierbei dann um einen Normalgeschwindigkeitsmodus.

Darüber hinaus kann der Etikettendrucker 11 einen Betriebsmodus aufweisen, in dem der Druckkopf 15 alternierend zwischen einer auf das Trägerband 12 abgesenkten Position und einer von dem Trägerband 12 abgehobenen Position verstellt wird. In der abgesenkten Position kann ein Etikett in dem jeweiligen Druckbereich bedruckt werden, und die abgehobene Position wird zwischen dem Bedrucken zweier aufeinander folgender Etiketten in den jeweiligen Druckbereichen eingenommen. In den Bereichen, in denen das jeweilige Etikett nicht bedruckt wird, kann der Druckkopf 15 die abgehobene Position einnehmen. Dabei werden in der abgehobenen Position des Druckkopfs 15 die Trägerband-Zugwalze 21, die weitere Trägerband-Zugwalze 71 und die Trägerband-Aufwickelwalze 41 mit einer höheren Drehgeschwindigkeit betrieben werden als bei abgesenkter Position des Druckkopfs 15. Hierzu muss das Trägerband 12 zwischen dem Bedrucken aufeinander folgender Druckbereiche alternierend abgebremst und beschleunigt werden. Dies kann insbesondere dann sinnvoll sein, wenn Schmucketiketten verwendet werden, die über große Bereiche hinweg nicht bedruckt werden. Durch das Vorsehen der weiteren Trägerband-Zugwalze 71 und der weiteren Trägerband-Andruckrolle 73 kann das Trägerband 12 stärker als sonst möglich beschleunigt werden. Das Abheben des Druckkopfs 15 ist insbesondere dann möglich, wenn als Gegenelement 19 eine wie nachstehend erläuterte Gleitplatte 19" (vgl. die Fig. 2, 3 und 8) verwendet wird.

Die Druckkopfeinheit 13 und die Führungseinheit 17 sind jeweils als austauschbares Modul ausgebildet und können jeweils von dem Etikettendrucker 11 abgenommen werden, wie es in Fig. 5 dargestellt ist. Hierzu stehen von der Trägerplatte 79 eine erste Aufnahme 81 für die Druckkopfeinheit 13 und eine zweite Aufnahme 83 für die Führungseinheit 17 ab. Die beiden Aufnahmen 81, 83 sind jeweils als horizontal orientierter Haltedorn in Form eines Rundstabs ausgebildet.

Mit dem jeweiligen einen Ende sind die beiden Aufnahmen 81, 83 an der Trägerplatte 79 befestigt, und von dem jeweiligen anderen, freitragenden Ende her können die Druckkopfeinheit 13 bzw. die Führungseinheit 17 auf die Aufnahmen 81, 83 aufgeschoben werden.

Die Druckkopfeinheit 13 kann dabei unabhängig davon, ob die Führungseinheit 17 von der zweiten Aufnahme 83 aufgenommen oder davon abgenommen ist, von der ersten Aufnahme 81 aufgenommen werden, und umgekehrt, d.h. die Führungseinheit 17 kann unabhängig davon, ob die Druckkopfeinheit 13 von der ersten Aufnahme 81 aufgenommen oder abgenommen ist, von der zweiten Aufnahme 83 aufgenommen werden. Um die Druckkopfeinheit 13 bzw. die Führungseinheit 17 an der jeweiligen Aufnahme 81, 83 zu befestigen, ist jeweils eine Rändelschraube 85, 87 vorgesehen (vgl. Fig. 4), die per Hand lösbar ist, so dass die Druckkopfeinheit 13 und die Führungseinheit 17 schnell und unkompliziert befestigbar und abnehmbar sind.

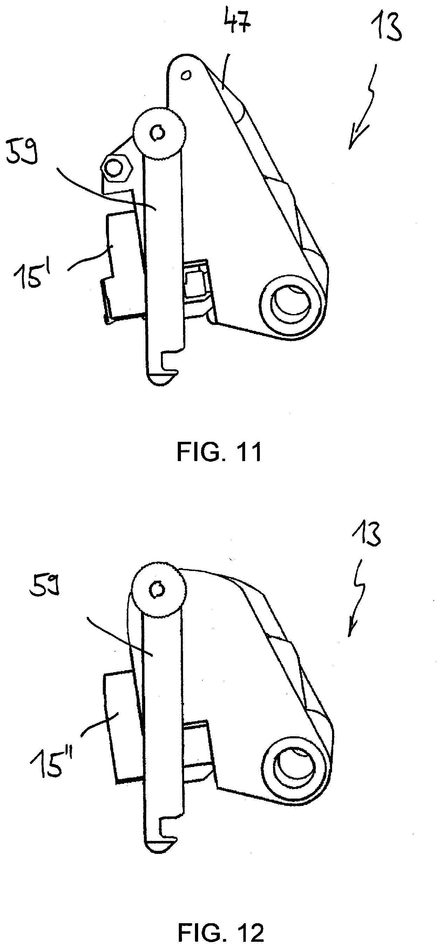

Für den Etikettendrucker 11 stehen zwei voneinander verschiedene Druckkopfeinheiten 13 und zwei voneinander verschiedene Führungseinheiten 17 zur Verfügung, wobei der Etikettendrucker 11, insbesondere die beiden Aufnahmen 81, 83, im zusammengesetzten und betriebsfähigen Zustand eine der beiden Druckkopfeinheiten 13 und eine der beiden Führungseinheiten 17 aufnimmt bzw. aufnehmen. Die erste der beiden Druckkopfeinheiten 13 besitzt einen Druckkopf 15, der als Thermotransfer-Druckkopf 15' ausgebildet ist, wie er in den Fig. 1 bis 4 und 11 gezeigt ist. Die zweite der beiden Druckkopfeinheiten 13 besitzt einen Druckkopf 15, der als Thermodirekt-Druckkopf 15" ausgebildet ist, wie er in Fig. 12 gezeigt ist. Die Druckkopfeinheit 13 mit dem Thermodirekt-Druckkopf 15" besitzt keine Thermotransferband-Andruckrolle. Die erste der beiden Führungseinheiten 17 besitzt als Gegenelement 19 eine angetriebene Druckwalze 19', wie sie in den Fig. 1, 4 und 7 gezeigt ist. Die zweite der beiden Führungseinheiten 17 besitzt als Gegenelement 19 eine mit einem Dämpfungselement 89 versehene Gleitplatte 19" aus Metall, wie sie bereits vorstehend erwähnt und in den Fig. 2, 3 und 8 gezeigt ist. Das Dämpfungselement 89 ist ein zwischen 0,5 mm und 1 mm dicker Filz, der dazu vorgesehen ist, um etwaige Toleranzen der Gleitplatte19" und des Drucckopfs 15 auszugleichen und eine Beschädigung des Druckkopfs 15 beim Absenken in Richtung der harten Gleitplatte 19" zu vermeiden. Zur Fixierung ist das Dämpfungselement 89 mit einem Kunststoffteil 137 heißverstemmt.

Der Thermotransfer-Druckkopf 15' kann zusammen mit dem Thermotransferband 44 betrieben werden, um im Thermotransferdruck-Verfahren zu drucken. Derartige Drucke sind besonders beständig. Der Thermotransfer-Druckkopf 15' kann grundsätzlich aber auch im Thermodirekt-Verfahren, d.h. ohne Thermotransferband 44, drucken. Der Thermotransfer-Druckkopf 15' ist somit flexibel einsetzbar, aber auch teuer. Der Thermodirekt-Druckkopf 15" kann nur im Thermodirekt-Verfahren drucken und ist daher günstiger. Die Druckwalze 19' ist aufgrund ihres Durchmesser in einem bestimmten Abstand von der Spendekante 27 angeordnet. Daher kann es sein, dass zu dem Zeitpunkt, an dem sich ein vorlaufendes Etikett an der Spendekante 27 von dem Trägerband 12 löst, ein nachlaufendes Etikett bereits teilweise unter dem Druckkopf 15 hindurchgelaufen ist, so dass ein Near-Edge-Druck an der vorderen Etikettenkante ohne weitere Maßnahmen nicht möglich ist. Um dies zu verhindern, muss entweder das Trägerband - unter Geschwindigkeitsverlust - kurzzeitig reversiert werden oder die Etiketten müssen - verbunden mit höheren Kosten - in einem größeren Abstand zueinander angeordnet werden. Dieses Problem, dass der Druckkopf 15 zu weit von der Spendekante 27 beabstandet ist, stellt sich bei der Gleitplatte 19" jedoch nicht, so dass hier Near-Edge-Drucke ohne weiteres möglich sind. Die Gleitplatte 19" mit dem Filz ist jedoch weniger langlebig und damit teurer.

Mit den zwei voneinander verschiedenen Druckkopfeinheiten 13 und den zwei voneinander verschiedenen Führungseinheiten 17 liegt ein Satz von voneinander verschiedenen Zubehörteilen für den Etikettendrucker 11 vor. Somit ist für ein Bedrucken mit unterschiedlicher Ausstattung (Thermotransfer-Druckkopf oder Thermodirekt-Druckkopf, Druckwalze oder Gleitplatte) nur ein einzelner Etikettendrucker 11 erforderlich. Insgesamt sind so vier voneinander verschiedene Konstellationen möglich, die, insbesondere abhängig von den jeweiligen Etikettenart und/oder dem gewünschten Bedruck, wahlweise genutzt werden können. Der Etikettendrucker 11 ist damit flexibel konfigurierbar.

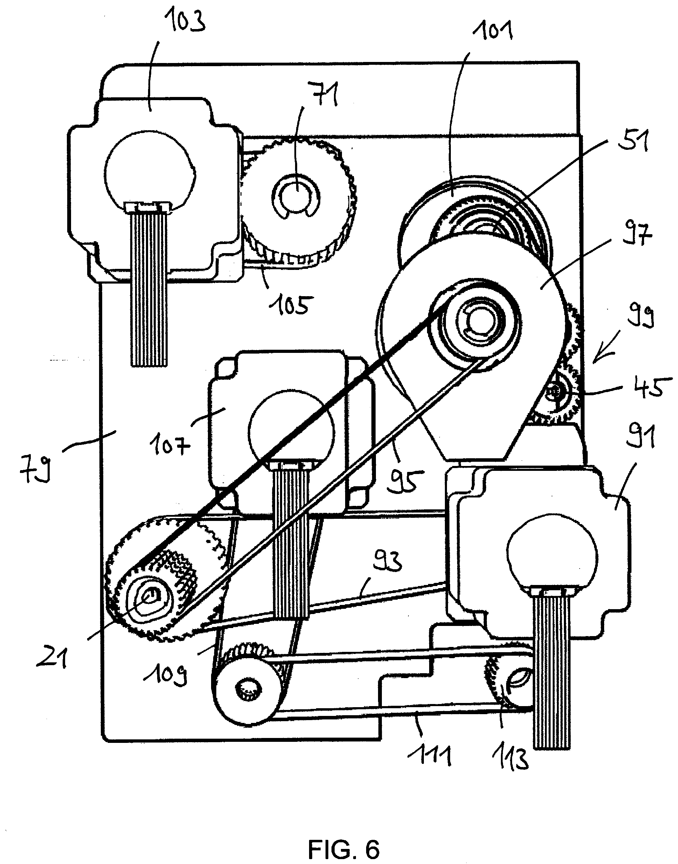

Die Trägerband-Aufwickelwalze 41 wird durch einen nicht gezeigten, eigenen Motor angetrieben. Die Antriebseinrichtung der übrigen Walzen 19', 21, 45, 51, 71 des Etikettendruckers 11 hingegen ist aus der Fig. 6 ersichtlich, die eine Rückansicht der Trägerplatte 79 zeigt.

Die Antriebseinrichtung umfasst zunächst einen ersten Motor 91, der über einen Zahnriemen 93 die Trägerband-Zugwalze 21 antreibt. Der erste Motor 91 treibt mittelbar über die Trägerband-Zugwalze 21, einen weiteren Zahnriemen 95, eine Rutschkupplung 97 und ein Getriebe 99 auch die Thermotransferband-Zugwalze 45 an. Von dem Getriebe 99 wird ferner unter Zwischenschaltung einer weiteren Rutschkupplung 101 auch die Thermotransferband-Aufwickelwalze 51 angetrieben. Bei dem ersten Motor 91 handelt es sich daher um einen gemeinsamen Motor für die Trägerband-Zugwalze 21, die Thermotransferband-Zugwalze 45 und die Thermotransferband-Aufwickelwalze 51, die damit mechanisch miteinander synchronisiert sind.

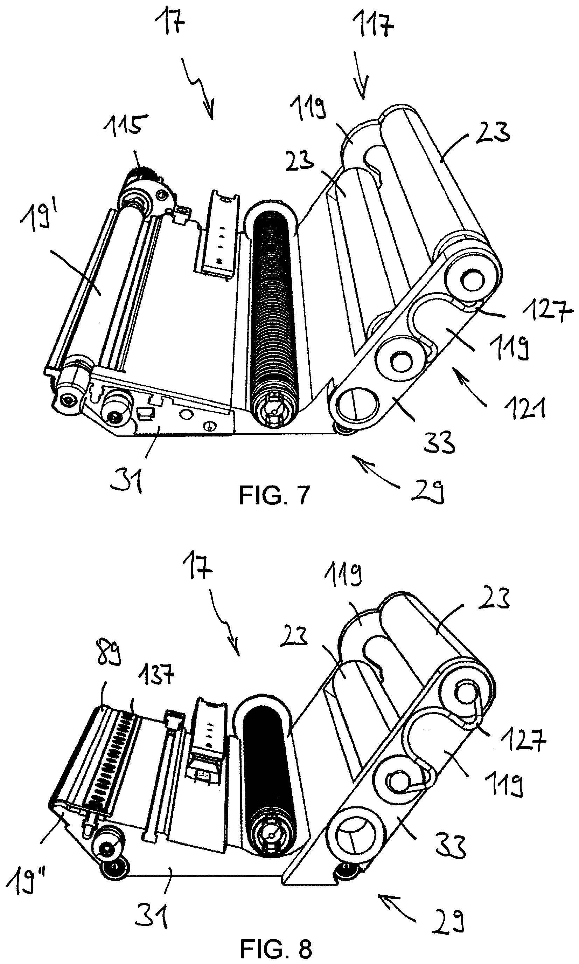

Ferner umfasst die Antriebseinrichtung einen zweiten Motor 103, der über einen weiteren Zahnriemen 105 die weitere Trägerband-Zugwalze 71 antreibt, sofern der weitere Antrieb mit der weiteren Trägerband-Zugwalze 71 und der weiteren Trägerband-Andruckrolle 73 vorhanden ist, und einen dritten Motor 107, der über zwei hintereinander geschaltete weitere Zahnriemen 109, 111 und zwei nachfolgende, ineinander eingreifende Zahnräder 113, 115 die Druckwalze 19' antreibt, sofern die Führungseinheit 17 mit der Druckwalze 19' eingesetzt ist. Das Zahnrad 113 ist an der Rückseite der Trägerplatte 79 angebracht (vgl. die Fig. 5 und 6), und das Zahnrad 115 an der Führungseinheit 17 mit der Druckwalze 19' (vgl. Fig. 7). Ist der weitere Antrieb nicht vorhanden, kann auch der zweite Motor 103 weggelassen werden. Ist die Führungseinheit 17 mit der Gleitplatte 19" eingesetzt, ist kein Zahnrad 115 vorgesehen (vgl. Fig. 8).

Bei dem zweiten Motor 103 handelt es sich um einen eigenen Motor der weiteren Trägerband-Zugwalze 71, und bei dem dritten Motor 107 handelt es sich um einen eigenen Motor der Druckwalze 19'. Grundsätzlich handelt es sich bei einem eigenen Motor um einen Motor, der nur eine Walze antreibt. Somit werden die Trägerband-Zugwalze 21, die weitere Trägerband-Zugwalze 71, die Druckwalze 19' und die Trägerband-Aufwickelwalze 41 von voneinander verschiedenen Motoren 91, 103, 107 angetrieben, die jedoch durch eine entsprechende Regelung elektronisch miteinander synchronisiert sind, um einen aufeinander abgestimmten Betrieb der Trägerband-Zugwalze 21, der weiteren Trägerband-Zugwalze 71, der Druckwalze 19' und der Trägerband-Aufwickelwalze 41 zu gewährleisten.

In Fig. 7 ist die Führungseinheit 17 mit der Druckwalze 19' gezeigt, und in Fig. 8 ist die Führungseinheit 17 mit der Gleitplatte 19" gezeigt. Der in beiden Fällen identische zweite Winkelarm 33 des Winkelelements 29 weist eine Halterung 117 mit zwei gabelförmig angeordneten Haltearme 119 auf, zwischen denen die beiden Trägerband-Andruckrollen 23 jeweils mit ihren beiden axialen Enden linear verschiebbar gelagert sind. In der Betriebsstellung der Führungseinheit 17 ist die Trägerband-Zugwalze 21 zwischen den beiden Trägerband-Andruckrollen 23 angeordnet. Die Trägerband-Andruckrollen 23 sind dabei jeweils senkrecht zu ihrer Rotationsachse, die jeweils parallel zu der Drehachse der Trägerband-Zugwalze 21 verläuft, verschiebbar gelagert, und zwar in der Betriebsstellung der Führungseinheit 17 in einer Verschieberichtung auf die Trägerband-Zugwalze 21 zu.

Zur Ausübung einer Anpresskraft auf das Trägerband 12 in der Betriebsstellung der Führungseinheit 17 ist eine Federeinrichtung 121 vorgesehen (vgl. die Fig. 7 bis 9), die die beiden Trägerband-Andruckrollen 23 jeweils in ihrer Verschieberichtung und damit aufeinander zu vorspannt, insbesondere zieht. Durch die Federeinrichtung 121 kann automatisch eine insbesondere passende Anpress- und damit Vorschubkraft auf das Trägerband 12 erzeugt werden.

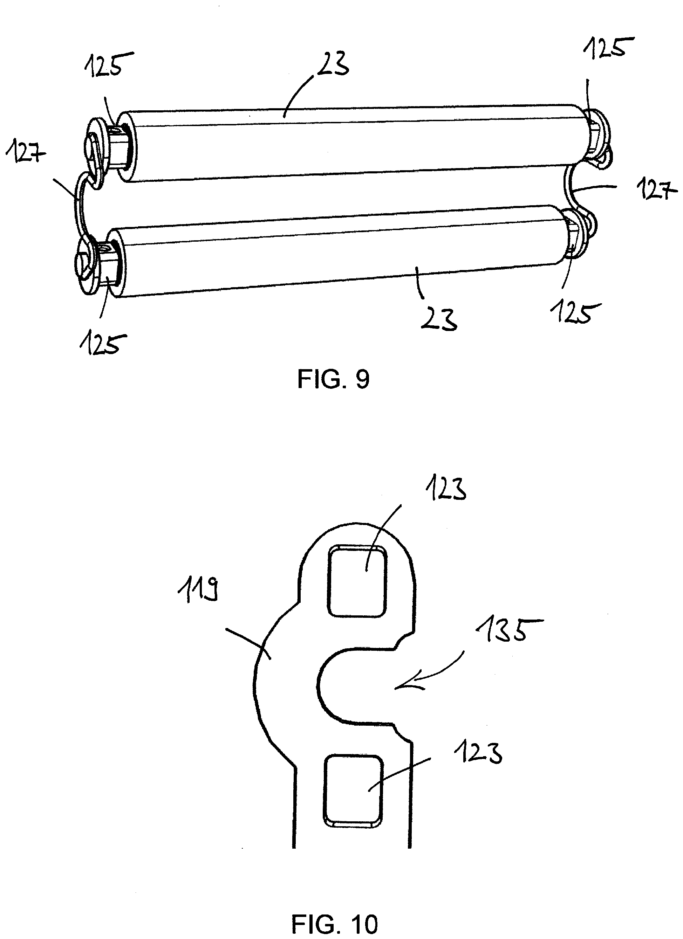

In den beiden Haltearmen 119, von denen in Fig. 10 der in den Fig. 7 und 8 hintere Haltearm 119 dargestellt ist, sind jeweils zwei Führungsbahnen 123 vorgesehen, die jeweils als ein rechteckförmiger, gerader Schlitz ausgebildet sind. In den Führungsbahnen 123, die die Haltearme 119 durchsetzen, sind die beiden Trägerband-Andruckrollen 23 mit ihren beiden axialen Enden jeweils verschiebbar geführt. Hierzu sind die axialen Enden der Trägerband-Andruckrollen 23 jeweils mit einem Gleitstein 125 versehen (vgl. Fig. 9), der in der jeweiligen Führungsbahn 123 verschiebbar geführt ist. Der in Fig. 10 dargestellte und in den Fig. 7 und 8 hintere Halterarm 119 weist in Vergleich zu dem in den Fig. 7 und 8 vorderen Haltearm 119 eine Aussparung 135 auf, um in der Betriebsstellung der Führungseinheit 17 ein Durchgreifen der Trägerband-Zugwalze 21 zu ermöglichen.

Konkret umfasst die Federeinrichtung 121 zwei Zugfedern 127, die jeweils außerhalb des zwischen den beiden Haltearmen 119 ausgebildeten Zwischenraums und jeweils an einen der beiden Haltearme 119 anliegend angeordnet sind. In den Fig. 7 und 8 ist lediglich eine der beiden Zugfedern 127 erkennbar. Die eine der beiden Zugfedern 127 greift dabei an dem einen der beiden axialen Enden der einen Trägerband-Andruckrolle 23 und an dem auf derselben Seite liegenden axialen Ende der anderen Trägerband-Andruckrolle 23 an, und die andere Zugfeder 127 an den anderen beiden axialen Enden. Die Zugfedern 127 sind dabei jeweils als ein langgestrecktes Drahtbiegeteil ausgebildet, das in einer Ebene verläuft und nicht gewunden ist, d.h. keine Wicklungen aufweist. An ihren beiden Drahtenden ist die jeweilige Zugfeder 127 hakenförmig ausgebildet, so dass sie einfach an den beiden auf derselben Seite liegenden axialen Enden der beiden Trägerband-Andruckrollen 23 befestigt werden kann.

Beim Verschwenken der Führungseinheit 17 aus der in den Fig. 2 und 3 gezeigten Einsetzstellung in die in den Fig. 1 und 4 gezeigte Betriebsstellung werden die beiden Trägerband-Andruckrollen 23 durch die Trägerband-Zugwalze 21 und gegen die Vorspannung der Federeinrichtung 121 auseinander gedrückt, d.h. der Abstand zwischen den beiden Trägerband-Andruckrollen 23 vergrößert sich. Die Betriebsstellung der Führungseinheit 17 kann dabei insbesondere dann erreicht werden, wenn sich die Trägerband-Zugwalze 21 in etwa auf Höhe der zu den beiden Rotationsachsen der beiden Trägerband-Andruckrollen 23 senkrechten Verbindungsgeraden befindet, oder sie kann bereits zuvor erreicht werden. Es kann aber auch vorgesehen sein, dass die Trägerband-Zugwalze 21 - relativ gesehen - über diese Verbindungsgerade hinaus in den Zwischenraum hineingeschwenkt wird. Die Verschwenkbewegung der Führungseinheit 17 gliedert sich dann in eine erste Phase, in der die Trägerband-Zugwalze 21 - relativ gesehen - bis zu der Verbindungsgeraden verschwenkt wird, und in eine an die erste Phase anschließende zweite Phase, in der die beiden Trägerband-Andruckrollen 23 durch die vorgespannte Federeinrichtung 121 wieder aufeinander zu verschoben werden, wodurch sich der der Abstand zwischen den beiden Trägerband-Andruckrollen 23 wieder verringert. Es findet somit eine Art Verrastung zwischen den beiden Trägerband-Andruckrollen 23 und der Trägerband-Zugwalze 21 statt, wodurch die Führungseinheit 17 in der Betriebsstellung gehalten werden kann.

Darüber hinaus umfasst die Führungseinheit 17 einen Sensor 129 zur Erkennung der Etiketten, insbesondere einen optischen Sensor, insbesondere eine Lichtschranke (vgl. Fig. 2), der bzw. die in Transportrichtung 25 des Trägerbands 12 gesehen zwischen der weiteren Trägerband-Zugwalze 71 und der weiteren Trägerband-Andruckrolle 73 einerseits und dem Druckkopf 15 und dem Gegenelement 19 andererseits angeordnet ist. Der Etikettensensor 129 ist dafür vorgesehen, die Vorderkanten der Etiketten zu erkennen, um den Antrieb des Trägerbands 12 mit der Steuerung für den Druckkopf 15 zu synchronisieren. Mit dem Etikettensensor 129 können insbesondere weiße Etiketten, Schmucketiketten und transparente Etiketten mit Blackmarks auf dem Trägerband 12 detektiert werden.

Transparente Etiketten, die auf einem Trägerband 12 ohne Blackmarks aufgebracht sind, hingegen können von dem Etikettensensor 129 nicht erkannt werden. Zur Erkennung derartiger Etiketten ist ein weiterer Sensor 131, nämlich ein Ultraschall-Sensor, vorgesehen (vgl. Fig. 2), der in Transportrichtung 25 des Trägerbands 12 gesehen zwischen der weiteren Trägerband-Zugwalze 71 und der weiteren Trägerband-Andruckrolle 73 einerseits und dem Druckkopf 15 und dem Gegenelement 19 andererseits angeordnet ist.

Für einen Wechsel der Etikettenrolle 39 wird ausgehend von der Betriebsstellung des Etikettendruckers in Fig. 1 zunächst die Rändelschraube 67 gelöst, dann wird der Hebel 59 im Uhrzeigersinn in seine Freigabestellung verschwenkt, um die Verhakung mit der Führungseinheit 17 zu lösen, und dann wird die Führungseinheit 15 gegen den Uhrzeigersinn in ihre Einsetzstellung für das Trägerband 12 verschwenkt. Sofern der weitere Antrieb mit der weitere Trägerband-Zugwalze 71 und der weitere Trägerband-Andruckrolle 73 vorhanden ist, muss zusätzlich das Schwenkelement 75 im Uhrzeigersinn in seine Einsetzstellung für das Trägerband 12 verschwenkt werden. Dies kann zu jedem beliebigen Zeitpunkt erfolgen. Anschließend kann das verbrauchte Trägerband 12 aus dem Etikettendrucker 11 entnommen und das neue Trägerband einfach von vorne in den Etikettendrucker 11 eingesetzt bzw. eingelegt werden.

Für einen Wechsel der Thermotransferbandrolle 49 werden zunächst die vorstehend erläuterten Schritte für einen Wechsel der Etikettenrolle 39 vorgenommen, ggf. mit Ausnahme des Verschwenkens des optionalen Schwenkelements 75. Anschließend wird der Blockierstift 69 nach vorne gezogen und die Druckkopfeinheit 13 kann im Uhrzeigersinn in ihre Einsetzstellung für das Thermotransferband 44 verschwenkt werden. Anschließend kann das verbrauchte Thermotransferband 44 aus dem Etikettendrucker 11 entnommen und das neue Thermotransferband einfach von vorne in den Etikettendrucker 11 eingesetzt bzw. eingelegt werden.

Für einen Wechsel bzw. Austausch der Führungseinheit 17 werden zunächst die vorstehend erläuterten Schritte für einen Wechsel der Etikettenrolle 39 vorgenommen, ggf. mit Ausnahme des Verschwenkens des optionalen Schwenkelements 75. Anschließend wird die Rändelschraube 87 gelöst und die Führungseinheit 17 kann nach vorne abgezogen und durch eine andere Führungseinheit ersetzt werden.

Für einen Wechsel bzw. Austausch der Druckkopfeinheit 13 werden zunächst die vorstehend erläuterten Schritte für einen Wechsel der Thermotransferbandrolle 49 vorgenommen, ggf. mit Ausnahme des Verschwenkens des optionalen Schwenkelements 75. Anschließend wird die Rändelschraube 85 gelöst und die Drucckopfeinheit 13 kann nach vorne abgezogen und durch eine andere Druckkopfeinheit ersetzt werden.

Der vorstehend erläuterte Etikettendrucker ist einfach zu bedienen und flexibel einsetzbar.

### Bezugszeichenliste

- 11: Etikettendrucker
- 12: Trägerband
- 13: Druckkopfeinheit
- 15: Druckkopf
- 15': Thermotransfer-Druckkopf
- 15": Thermodirekt-Druckkopf
- 17: Führungseinheit
- 19: Gegenelement
- 19': Druckwalze
- 19": Gleitplatte
- 21: Trägerband-Zugwalze
- 23: Trägerband-Andruckrolle
- 25: Transportrichtung
- 27: Spendekante
- 29: Winkelelement
- 31, 33: Winkelarm
- 35, 37: Umlenkrolle
- 39: Etikettenrolle
- 41: Trägerband-Aufwickelwalze
- 44: Thermotransferband
- 45: Thermotransferband-Zugwalze
- 47: Thermotransferband-Andruckrolle
- 49: Thermotransferbandrolle
- 51: Thermotransferband-Aufwickelwalze
- 53: Schwenkachse
- 55: Druckkopfeinheit-Schwenkachse
- 57: Halteeinrichtung
- 59: Hebel
- 61: Achse
- 63: Ausnehmung
- 65: Stift
- 67: Rändelschraube
- 69: Blockierstift
- 71: weitere Trägerband-Zugwalze
- 73: weitere Trägerband-Andruckrolle
- 75: Schwenkelement
- 77: weitere Schwenkachse
- 79: Trägerplatte
- 81: erste Aufnahme
- 83: zweite Aufnahme
- 85: Rändelschraube
- 87: Rändelschraube
- 89: Dämpfungselement
- 91: erster Motor
- 93: Zahnriemen
- 95: weiteren Zahnriemen
- 97: Rutschkupplung
- 99: Getriebe
- 101: weitere Rutschkupplung
- 103: zweiter Motor
- 105: weiterer Zahnriemen
- 107: dritter Motor
- 109: weiterer Zahnriemen
- 111: weiterer Zahnriemen
- 113: Zahnrad
- 115: Zahnrad
- 117: Halterung
- 119: Haltearm
- 121: Federeinrichtung
- 123: Führungsbahn
- 125: Gleitstein
- 127: Zugfeder
- 129: optischer Sensor
- 131: Ultraschall-Sensor
- 133: Transportrichtung
- 135: Aussparung
- 137: Kunststoffteil
- 139: Sperröffnung

## Patentansprüche

1. Etikettendrucker zum Bedrucken von auf einem Trägerband (12) aufgebrachten, insbesondere auf Rolle gewickelten Etiketten, umfassend
einen Druckkopf (15) und ein Gegenelement (19) zu dem Druckkopf (15), das dazu ausgebildet ist, das Trägerband (12) mit den Etiketten in Anlage an dem Druckkopf (15) zu halten, insbesondere eine angetriebene Druckwalze (19'), wobei das Trägerband (12) zwischen dem Druckkopf (15) und dem Gegenelement (19) hindurchführbar ist,
einen Antriebsmechanismus für das Trägerband (12) mit einer angetriebenen Trägerband-Zugwalze (21), die um eine Drehachse drehbar ist, und
wenigstens eine der Trägerband-Zugwalze (21) zugeordnete, nicht angetriebene Trägerband-Andruckrolle (23), die zwei axiale Enden aufweist, um eine Rotationsachse drehbar ist und parallel zu der Drehachse der Trägerband-Zugwalze (21) verläuft,
wobei das Trägerband (12) zwischen der Trägerband-Zugwalze (21) und der jeweiligen Trägerband-Andruckrolle (23) hindurchführbar und insbesondere entlang einer vorgegebenen Trägerband-Transportbahn transportierbar ist,
**dadurch gekennzeichnet**,
die jeweilige Trägerband-Andruckrolle (23) senkrecht zu ihrer Rotationsachse und in einer Verschieberichtung auf die Trägerband-Zugwalze (21) zu verschiebbar gelagert ist, wobei zur Ausübung einer Anpresskraft auf das Trägerband (12) eine Federeinrichtung (121) vorgesehen ist, die die jeweilige Trägerband-Andruckrolle (23) in die Verschieberichtung vorspannt.

2. Etikettendrucker nach Anspruch 1,
**dadurch gekennzeichnet,**
**dass** zwei Trägerband-Andruckrollen (23) vorgesehen sind, wobei die Trägerband-Zugwalze (21) zwischen den beiden Trägerband-Andruckrollen (23) angeordnet ist und/oder die Federeinrichtung (121) die beiden Trägerband-Andruckrollen (23) aufeinander zu vorspannt.

3. Etikettendrucker nach Anspruch 1 oder 2,
**dadurch gekennzeichnet,**
**dass** die jeweilige Trägerband-Andruckrolle (23) an ihren beiden axialen Enden jeweils verschiebbar gelagert ist.

4. Etikettendrucker nach einem der vorstehenden Ansprüche,
**dadurch gekennzeichnet,**
**dass** eine Halterung (117) vorgesehen ist, um die jeweilige Trägerband-Andruckrolle (23) verschiebbar zu lagern.

5. Etikettendrucker nach Anspruch 4,
**dadurch gekennzeichnet,**
**dass** die Halterung (117) zwei, insbesondere gabelförmig angeordnete, Haltearme (119) aufweist, an und zwischen denen die jeweilige Trägerband-Andruckrolle (23) verschiebbar gelagert ist.

6. Etikettendrucker nach Anspruch 5,
**dadurch gekennzeichnet,**
**dass** die beiden Haltearme (119) jeweils mit wenigstens einer, insbesondere linear verlaufenden, Führungsbahn (123) versehen sind, in denen die beiden axialen Enden der jeweiligen Trägerband-Andruckrolle (23) verschiebbar geführt sind.

7. Etikettendrucker nach Anspruch 6,
**dadurch gekennzeichnet,**
**dass** die jeweilige Führungsbahn (123) als ein länglicher, insbesondere rechteckförmiger oder langlochförmiger, den jeweiligen Haltearm (119) durchsetzender Schlitz ausgebildet ist.

8. Etikettendrucker nach Anspruch 6 oder 7,
**dadurch gekennzeichnet,**
**dass** die jeweilige Trägerband-Andruckrolle (23) an ihren beiden axialen Enden jeweils einen Gleitstein (125) aufweist, der in der jeweiligen Führungsbahn (123) verschiebbar geführt ist.

9. Etikettendrucker nach einem der Ansprüche 4 bis 8,
**dadurch gekennzeichnet,**
**dass** die Halterung (117), insbesondere eine Führungseinheit (17) für das Trägerband (12), die die Halterung (117) umfasst, um eine Schwenkachse (53) zwischen einer Betriebsstellung und einer Einsetzstellung für das Trägerband (12) verschwenkbar ist, wobei in der Einsetzstellung für das Trägerband (12) die jeweilige Trägerband-Andruckrolle (23) von der Trägerband-Zugwalze (21) weggeschwenkt ist.

10. Etikettendrucker nach einem der vorstehenden Ansprüche,
**dadurch gekennzeichnet,**
**dass** die Federeinrichtung (121) wenigstens eine Zugfeder (127) umfasst, wobei die jeweilige Zugfeder (127) an einem der beiden axialen Enden der jeweiligen Trägerband-Andruckrolle (23) angreift.

11. Etikettendrucker nach Anspruch 10,
**dadurch gekennzeichnet,**
**dass** zwei Zugfedern (127) vorgesehen sind, wobei die eine Zugfeder (127) an dem einen der beiden axialen Enden der jeweiligen Trägerband-Andruckrolle (23) und die andere Zugfeder (127) an dem anderen der beiden axialen Enden der jeweiligen Trägerband-Andruckrolle (23) angreift.

12. Etikettendrucker nach Anspruch 10 oder 11,
**dadurch gekennzeichnet,**
**dass** zwei Trägerband-Andruckrollen (23) vorgesehen sind, wobei die jeweilige Zugfeder (127) an einem der beiden axialen Enden der einen Trägerband-Andruckrolle (23) und an einem der beiden axialen Enden der anderen Trägerband-Andruckrolle (23) angreift.

13. Etikettendrucker nach einem der Ansprüche 10 bis 12 und dem Anspruch 5, **dadurch gekennzeichnet,**
**dass** die jeweilige Zugfeder (127) außerhalb des zwischen den beiden Haltearmen (119) ausgebildeten Zwischenbereichs und/oder an den jeweiligen Haltearm (119) anliegend angeordnet ist.

14. Etikettendrucker nach einem der Ansprüche 10 bis 13,
**dadurch gekennzeichnet,**
**dass** die jeweilige Zugfeder (127) als ein, insbesondere langgestrecktes, sich in einer Ebene erstreckendes und/oder ungewundenes, Drahtbiegeteil ausgebildet ist, wobei bevorzugt das Drahtbiegeteil spiegelsymmetrisch ausgebildet ist und/oder die beiden Drahtenden der jeweiligen Zugfeder (127) hakenförmig ausgebildet sind.

15. Etikettendrucker nach einem der vorstehenden Ansprüche,
**dadurch gekennzeichnet,**
**dass** die vorgegebene Trägerband-Transportbahn im Bereich der Trägerband-Zugwalze (21) und der jeweiligen Trägerband-Andruckrolle (23) einen S-förmigen Verlauf aufweist, und/oder
**dass** zwei Trägerband-Andruckrollen (23) vorgesehen sind, wobei die vorgegebene Trägerband-Transportbahn im Bereich der Trägerband-Zugwalze (21) und der beiden Trägerband-Andruckrollen (23) einen Doppel-S-förmigen Verlauf aufweist.

16. Etikettendrucker nach einem der Ansprüche 9 bis 15,
**dadurch gekennzeichnet,**
**dass** zwei Trägerband-Andruckrollen (23) vorgesehen sind, die über einen Zwischenraum voneinander beabstandet angeordnet sind, wobei die Trägerband-Zugwalze (21) in der Betriebsstellung der Halterung (117) oder der Führungseinheit (17) in den Zwischenraum eingreift und/oder in der Einsetzstellung der Halterung (117) oder der Führungseinheit (17) relativ zu dem Zwischenraum aus dem Zwischenraum zurückgezogen ist.

17. Etikettendrucker nach Anspruch 16,
**dadurch gekennzeichnet,**
**dass** beim Verschwenken der Halterung (117) oder der Führungseinheit (17) aus der Einsetzstellung in die Betriebsstellung zumindest in einer ersten Phase der Verschwenkbewegung die beiden Trägerband-Andruckrollen (23) durch die Trägerband-Zugwalze (21), unter Vergrößerung ihres gegenseitigen Abstands und gegen die Vorspannung der Federeinrichtung (121) auseinander gedrückt werden.

18. Etikettendrucker nach Anspruch 17,
**dadurch gekennzeichnet,**
**dass** die Trägerband-Zugwalze (21) relativ zu dem Zwischenraum über die zu den beiden Rotationsachsen der beiden Trägerband-Andruckrollen (23) senkrechte Verbindungsgerade hinaus in den Zwischenraum hineingeschwenkt wird, so dass in einer an die erste Phase anschließenden zweiten Phase der Verschwenkbewegung die beiden Trägerband-Andruckrollen (23) durch die vorgespannte Federeinrichtung (121) und unter Verringerung ihres gegenseitigen Abstands wieder aufeinander zu verschoben werden.

19. Etikettendrucker nach einem der Ansprüche 9 bis 18,
**dadurch gekennzeichnet,**
**dass** die Führungseinheit (17) für das Trägerband (12) das Gegenelement (19) zu dem Druckkopf (15) umfasst, wobei in der Einsetzstellung der Führungseinheit (17) das Gegenelement (19) von dem Druckkopf (15) weggeschwenkt ist.

20. Etikettendrucker nach einem der vorstehenden Ansprüche,
**dadurch gekennzeichnet,**
**dass** in Transportrichtung (25) des Trägerbands (12) gesehen die Trägerband-Zugwalze (21) und die jeweilige Trägerband-Andruckrolle (23) nach dem Druckkopf (15) und dem Gegenelement (19) und insbesondere nach einer nach dem Druckkopf (15) und dem Gegenelement (19) angeordneten Spendekante (27) des Etikettendruckers (11) angeordnet sind.

## Claims

1. A label printer for printing labels applied to a carrier tape (12), in particular wound onto a roll, comprising
a printhead (15) and a counter-element (19) to the printhead (15), which is configured to hold the carrier tape (12) with the labels in contact with the printhead (15), in particular a driven print roller (19'), wherein the carrier tape (12) can be led between the printhead (15) and the counter-element (19);
a drive mechanism for the carrier tape (12) having a driven carrier tape drawing roller (21) which is rotatable about an axis of rotation; and
at least one non-driven carrier tape pressure roller (23) which is associated with the carrier tape drawing roller (21), which has two axial ends, which is rotatable about a rotational axis and which extends in parallel with the axis of rotation of the carrier tape drawing roller (21),
wherein the carrier tape (12) can be led between the carrier tape drawing roller (21) and the respective carrier tape pressure roller (23) and can in particular be transported along a predefined carrier tape transport path,
**characterized in that**
the respective carrier tape pressure roller (23) is displaceably supported perpendicular to its rotational axis and in a displacement direction toward the carrier tape drawing roller (21), with a spring device (121) being provided to exert a pressing force onto the carrier tape (12), said spring device (121) preloading the respective carrier tape pressure roller (23) in the displacement direction.

2. A label printer in accordance with claim 1,
**characterized in that**
two carrier tape pressure rollers (23) are provided, with the carrier tape drawing roller (21) being arranged between the two carrier tape pressure rollers (23) and/or the spring device (121) preloading the two carrier tape pressure rollers (23) toward one another.

3. A label printer in accordance with claim 1 or claim 2,
**characterized in that**
the respective carrier tape pressure roller (23) is displaceably supported at its two axial ends.

4. A label printer in accordance with any one of the preceding claims,
**characterized in that**
a holder (117) is provided to displaceably support the respective carrier tape pressure roller (23).

5. A label printer in accordance with claim 4,
**characterized in that**
the holder (117) has two holding arms (119), in particular arranged in a fork-like manner, at and between which the respective carrier tape pressure roller (23) is displaceably supported.

6. A label printer in accordance with claim 5,
**characterized in that**
the two holding arms (119) are each provided with at least one guide track (123) in particular extending in a linear manner, in which guide tracks the two axial ends of the respective carrier tape pressure roller (23) are displaceably guided.

7. A label printer in accordance with claim 6,
**characterized in that**
the respective guide track (123) is configured as an elongate slot, in particular a slot in the shape of a rectangle or in the shape of an elongate hole, which passes through the respective holding arm (119).

8. A label printer in accordance with claim 6 or claim 7,
**characterized in that**
the respective carrier tape pressure roller (23) has a respective sliding block (125) at its two axial ends which is displaceably guided in the respective guide track (123).

9. A label printer in accordance with any one of the claims 4 to 8,
**characterized in that**
the holder (117), in particular a guide unit (17) for the carrier tape (12) which comprises the holder (117), is pivotable about a pivot axle (53) between an operating position and an insertion position for the carrier tape (12), with, in the insertion position for the carrier tape (12), the respective carrier tape pressure roller (23) being pivoted away from the carrier tape drawing roller (21).

10. A label printer in accordance with any one of the preceding claims,
**characterized in that**
the spring device (121) comprises at least one tension spring (127), with the respective tension spring (127) engaging at one of the two axial ends of the respective carrier tape pressure roller (23).

11. A label printer in accordance with claim 10,
**characterized in that**
two tension springs (127) are provided, with the one tension spring (127) engaging at the one of the two axial ends of the respective carrier tape pressure roller (23) and the other tension spring (127) engaging at the other of the two axial ends of the respective carrier tape pressure roller (23).

12. A label printer in accordance with claim 10 or claim 11,
**characterized in that**
two carrier tape pressure rollers (23) are provided, with the respective tension spring (127) engaging at one of the two axial ends of the one carrier tape pressure roller (23) and at one of the two axial ends of the other carrier tape pressure roller (23).

13. A label printer in accordance with any one of the claims 10 to 12 and with claim 5,
**characterized in that**
the respective tension spring (127) is arranged outside the intermediate region formed between the two holding arms (119) and/or is arranged contacting the respective holding arm (119).

14. A label printer in accordance with any one of the claims 10 to 13,
**characterized in that**
the respective tension spring (127) is configured as a bent wire part, in particular as a bent wire part which is elongated, which extends in a plane and/or which is unwound, with preferably the bent wire part being formed with mirror symmetry and/or the two wire ends of the respective tension spring (127) being formed as hook-shaped.

15. A label printer in accordance with any one of the preceding claims,
**characterized in that**
the predefined carrier tape transport path has an S-shaped curve in the region of the carrier tape drawing roller (21) and of the respective carrier tape pressure roller (23); and/or
**in that** two carrier tape pressure rollers (23) are provided, with the predefined carrier tape transport path having a double S-shaped curve in the region of the carrier tape drawing roller (21) and of the two carrier tape pressure rollers (23).

16. A label printer in accordance with any one of the claims 9 to 15,
**characterized in that**
two carrier tape pressure rollers (23) are provided which are arranged spaced apart from one another via an intermediate space, with the carrier tape drawing roller (21) engaging into the intermediate space in the operating position of the holder (117) or of the guide unit (17) and/or being withdrawn, relative to the intermediate space, from the intermediate space in the insertion position of the holder (117) or of the guide unit (17).

17. A label printer in accordance with claim 16,
**characterized in that**,
on the pivoting of the holder (117) or of the guide unit (17) from the insertion position into the operating position, at least in a first phase of the pivot movement, the two carrier tape pressure rollers (23) are pressed apart by the carrier tape drawing roller (21) while increasing their mutual spacing and against the preload of the spring device (121).

18. A label printer in accordance with claim 17,
**characterized in that**
the carrier tape drawing roller (21) is pivoted relative to the intermediate space beyond the straight connecting line perpendicular to the two rotational axes of the two carrier tape pressure rollers (23) into the intermediate space so that, in a second phase of the pivot movement following the first phase, the two carrier tape pressure rollers (23) are displaced toward one another again by the preloaded spring device (121) and while reducing their mutual spacing.

19. A label printer in accordance with any one of the claims 9 to 18,
**characterized in that**
the guide unit (17) for the carrier tape (12) comprises the counter-element (19) to the printhead (15), with the counter-element (19) being pivoted away from the printhead (15) in the insertion position of the guide unit (17).

20. A label printer in accordance with any one of the preceding claims,
**characterized in that**,
viewed in the transport direction (25) of the carrier tape (12), the carrier tape drawing roller (21) and the respective carrier tape pressure roller (23) are arranged after the printhead (15) and the counter-element (19) and are in particular arranged after a dispensing edge (27) of the label printer (11) arranged after the printhead (15) and the counter-element (19).

## Revendications

1. Imprimante d'étiquettes pour imprimer des étiquettes appliquées sur un ruban porteur (12), en particulier enroulées en un rouleau, comprenant une tête d'impression (15) et un contre-élément (19) complémentaire à la tête d'impression (15), qui est réalisé pour maintenir le ruban porteur (12) avec les étiquettes en appui contre la tête d'impression (15), en particulier un cylindre de pression entraîné (19'), le ruban porteur (12) pouvant passer entre la tête d'impression (15) et le contre-élément (19),
un mécanisme d'entraînement du ruban porteur (12), ayant un cylindre entraîné (21) de traction de ruban porteur, qui peut tourner autour d'un axe de rotation, et
au moins un rouleau presseur de ruban porteur (23) non entraîné, associé au cylindre de traction de ruban porteur (21), ayant deux extrémités axiales, pouvant tourner autour d'un axe de rotation et s'étendant parallèlement à l'axe de rotation du cylindre de traction de ruban porteur (21),
le ruban porteur (12) pouvant passer entre le cylindre de traction de ruban porteur (21) et le rouleau presseur de ruban porteur (23) respectif et pouvant en particulier être transporté le long d'une voie prédéterminée de transport du ruban porteur,
**caractérisée en ce que**
le rouleau presseur de ruban porteur (23) respectif est monté de façon mobile en translation perpendiculairement à son axe de rotation et dans une direction de translation vers le cylindre de traction de ruban porteur (21), un dispositif à ressort (121) étant prévu pour exercer une force de pressage sur le ruban porteur (12) et mettant sous précontrainte le rouleau presseur de ruban porteur (23) respectif dans la direction de translation.

2. Imprimante d'étiquettes selon la revendication 1,
**caractérisée en ce que**
il est prévu deux rouleaux presseurs de ruban porteur (23), le cylindre de traction de ruban porteur (21) étant disposé entre les deux rouleaux presseurs de ruban porteur (23), et/ou le dispositif à ressort (121) mettant sous précontrainte les deux rouleaux presseurs de ruban porteur (23) l'un vers l'autre.

3. Imprimante d'étiquettes selon la revendication 1 ou 2,
**caractérisée en ce que**
le rouleau presseur de ruban porteur (23) respectif est monté de façon mobile en translation à ses deux extrémités axiales respectives.

4. Imprimante d'étiquettes selon l'une des revendications précédentes,
**caractérisée en ce que**
il est prévu un élément de maintien (117) pour monter de façon mobile en translation le rouleau presseur de ruban porteur (23) respectif.

5. Imprimante d'étiquettes selon la revendication 4,
**caractérisée en ce que**
l'élément de maintien (117) présente deux bras de maintien (119), en particulier disposés en forme de fourche, sur lesquels et entre lesquels le rouleau presseur de ruban porteur (23) respectif est monté de façon mobile en translation.

6. Imprimante d'étiquettes selon la revendication 5,
**caractérisée en ce que**
les deux bras de maintien (119) sont pourvus chacun d'au moins une voie de guidage (123), en particulier linéaire, dans laquelle les deux extrémités axiales du rouleau presseur de ruban porteur (23) respectif sont guidées de façon mobile en translation.

7. Imprimante d'étiquettes selon la revendication 6,
**caractérisée en ce que**
la voie de guidage respective (123) est réalisée sous la forme d'une fente allongée, en particulier rectangulaire ou en forme de trou oblong, traversant le bras de maintien (119) respectif.

8. Imprimante d'étiquettes selon la revendication 6 ou 7,
**caractérisée en ce que**
le rouleau presseur de ruban porteur (23) respectif présente, à chacune de ses deux extrémités axiales, un coulisseau (125) qui est guidé de façon mobile en translation dans la voie de guidage (123) respective.

9. Imprimante d'étiquettes selon l'une des revendications 4 à 8,
**caractérisée en ce que**
l'élément de maintien (117), en particulier une unité de guidage (17) pour le ruban porteur (12) munie de l'élément de maintien (117), peut être pivoté autour d'un axe de pivotement (53) entre une position de fonctionnement et une position d'insertion pour le ruban porteur (12), le rouleau presseur de ruban porteur (23) respectif étant pivoté en éloignement du cylindre de traction de ruban porteur (21) dans la position d'insertion pour le ruban porteur (12).

10. Imprimante d'étiquettes selon l'une des revendications précédentes,
**caractérisée en ce que**
le dispositif à ressort (121) comprend au moins un ressort de traction (127), le ressort de traction (127) respectif agissant sur l'une des deux extrémités axiales du rouleau presseur de ruban porteur (23) respectif.

11. Imprimante d'étiquettes selon la revendication 10,
**caractérisée en ce que**
il est prévu deux ressorts de traction (127), l'un des ressorts de traction (127) agissant sur l'une des deux extrémités axiales du rouleau presseur de ruban porteur (23) respectif et l'autre ressort de traction (127) agissant sur l'autre des deux extrémités axiales du rouleau presseur de ruban porteur (23) respectif.

12. Imprimante d'étiquettes selon la revendication 10 ou 11,
**caractérisée en ce que**
il est prévu deux rouleaux presseurs de ruban porteur (23), le ressort de traction (127) respectif agissant sur l'une des deux extrémités axiales d'un rouleau presseur de ruban porteur (23) et sur l'une des deux extrémités axiales de l'autre rouleau presseur de ruban porteur (23).

13. Imprimante d'étiquettes selon l'une des revendications 10 à 12 et la revendication 5,
**caractérisée en ce que**
le ressort de traction (127) respectif est disposé à l'extérieur de la zone intermédiaire formée entre les deux bras de maintien (119) et/ou s'appuie contre le bras de maintien (119) respectif.

14. Imprimante d'étiquettes selon l'une des revendications 10 à 13,
**caractérisée en ce que**
le ressort de traction (127) respectif est réalisé sous forme de pièce en fil plié, en particulier allongée, s'étendant dans un plan et/ou non tordue, la pièce en fil plié étant de préférence réalisée de façon symétrique et/ou les deux extrémités de fil du ressort de traction (127) respectif étant réalisées en forme de crochet.

15. Imprimante d'étiquettes selon l'une des revendications précédentes,
**caractérisée en ce que**
la voie prédétermine de transport de ruban porteur présente un tracé en S dans la zone du cylindre de traction de ruban porteur (21) et du rouleau presseur de ruban porteur (23) respectif, et/ou
il est prévu deux rouleaux presseurs de ruban porteur (23), la voie prédéterminée de transport de ruban porteur présentant un tracé en double S dans la zone du cylindre de traction de ruban porteur (21) et des deux rouleaux presseurs de ruban porteur (23).

16. Imprimante d'étiquettes selon l'une des revendications 9 à 15,
**caractérisée en ce que**
il est prévu deux rouleaux presseurs de ruban porteur (23) qui sont disposés à distance l'un de l'autre par un espace intermédiaire, le cylindre de traction de ruban porteur (21) s'engageant dans l'espace intermédiaire dans la position de fonctionnement de l'élément de maintien (117) ou de l'unité de guidage (17) et/ou étant rétracté hors de l'espace intermédiaire dans la position d'insertion de l'élément de maintien (117) ou de l'unité de guidage (17) par rapport à l'espace intermédiaire.

17. Imprimante d'étiquettes selon la revendication 16,
**caractérisée en ce que**
lors du pivotement de l'élément de maintien (117) ou de l'unité de guidage (17) depuis la position d'insertion jusque dans la position de fonctionnement, au moins dans une première phase du mouvement de pivotement, les deux rouleaux presseurs de ruban porteur (23) sont pressés à l'écart l'un de l'autre par le cylindre de traction de ruban porteur (21), avec augmentation de leur espacement mutuel et à l'encontre de la précontrainte du dispositif à ressort (121).

18. Imprimante d'étiquettes selon la revendication 17,
**caractérisée en ce que**
le cylindre de traction de ruban porteur (21) est pivoté jusque dans l'espace intermédiaire au-delà de la droite de liaison perpendiculaire aux deux axes de rotation des deux rouleaux presseurs de ruban porteur (23) par rapport à l'espace intermédiaire, de sorte que, dans une deuxième phase du mouvement de pivotement suivant la première phase, les deux rouleaux presseurs de ruban porteur (23) sont à nouveau déplacés l'un vers l'autre par le dispositif à ressort (121) précontraint, avec réduction de leur espacement mutuel.

19. Imprimante d'étiquettes selon l'une des revendications 9 à 18,
**caractérisée en ce que**
l'unité de guidage (17) pour le ruban porteur (12) comprend le contre-élément (19) complémentaire à la tête d'impression (15),
dans la position d'insertion de l'unité de guidage (17), le contre-élément (19) étant pivoté en éloignement de la tête d'impression (15).

20. Imprimante d'étiquettes selon l'une des revendications précédentes,
**caractérisée en ce que**
vu dans la direction de transport (25) du ruban porteur (12), le cylindre de traction de ruban porteur (21) et le rouleau presseur de ruban porteur (23) respectif sont disposés en aval de la tête d'impression (15) et du contre-élément (19) et, en particulier, en aval d'un bord de distribution (27) de l'imprimante d'étiquettes (11) disposé en aval de la tête d'impression (15) et du contre-élément (19).
